# EUROPÄISCHE PATENTSCHRIFT

(11) **EP 1 476 337 B1**
(45) Veröffentlichungstag und Bekanntmachung des Hinweises auf die Patenterteilung: **21.09.2005**
(21) Anmeldenummer: 03742487.6
(22) Anmeldetag: 12.02.2003
(51) Int. Cl.: B60T 7/06, B60R 21/09

(54) **VORRICHTUNG ZUM ÖFFNEN EINER LAGERUNG**
DEVICE FOR OPENING A BEARING ARRANGEMENT
DISPOSITIF D'OUVERTURE D'UN PALIER

(30) Priorität: 19.02.2002 DE 10207006
(43) Veröffentlichungstag der Anmeldung: 17.11.2004
(73) Patentinhaber: ZF Lemförder Metallwaren AG, 49448 Lemförde (DE)
(72) Erfinder: BURGSTALER, Andree, 32351 Dielingen (DE); DÜTZ, Jan, 49401 Damme (DE); PAPKE, Simone, 49076 Osnabrück (DE)
(86) Internationale Anmeldenummer: PCT/DE2003/000416
(87) Internationale Veröffentlichungsnummer: WO 2003/070533

(56) Entgegenhaltungen:
- WO-A-02/051669
- DE-A- 10 105 546
- DE-C- 10 040 043
- GB-A- 2 334 078

## Beschreibung

Die Erfindung betrifft eine Vorrichtung zum Öffnen einer Lagerung, insbesondere einer Pedalbolzenlagerung eines Kraftfahrzeuges, mit mindestens einem ersten Lagerteil, welches mindestens eine Durchgangsbohrung für eine Bolzenverbindung zu mindestens einem Anschlussteil aufweist, sowie mindestens einem Lagerbolzen, welcher sich koaxial durch die Durchgangsbohrung erstreckt, um das Lagerteil und das Anschlussteil miteinander zu verbinden, wobei Mittel vorhanden sind, die das Anschlussteil gerichtet aus dem Gefahrenbereich heraus bewegen, also vorzugsweise in Richtung Fahrzeugfront. Ferner sind Mittel zum Zerstören des Lagerbolzens vorgesehen, die die Lagerung öffnen und damit das Anschlussteil lösen, um dadurch eine zusätzliche Sicherheitsfunktion zu gewährleisten.

Derartige Sicherheitsvorrichtungen kommen unter anderem im Fußraum von Fahrgastzellen in Kraftfahrzeugen in Verbindung mit Pedalverbindungen über einen Bolzen zur Vermeidung von Verletzungsrisiken aufgrund von Aufprallunfällen zum Einsatz. Die Verletzungsrisiken liegen darin begründet, dass bei einem Aufprallunfall die Insassen nicht in der Lage sind, die auftretenden Beschleunigungskräfte abzufangen, so dass unter anderem die unteren Extremitäten der im Frontbereich sitzenden Person in den Fußraum hinein geschleudert werden. Zusätzlich kommt bei einem Unfall hinzu, dass eine Verformung des Vorderwagens sich unmittelbar oder mittelbar auf die Pedale auswirkt und diese in den Fußraum des Kraftfahrzeuges hinein bewegt. Die in der Folge entstehenden Verletzungen sind für den oder die Betroffenen schmerzhaft und können sogar bis zu lebenslangen Verstümmelungen führen.

Um diesem Umstand entgegenzuwirken sind aus dem Stand der Technik unterschiedliche Lösungen bekannt. Hauptsächlich werden zwei Arten von Sicherheitsvorrichtungen unterschieden. Zum einen wird durch Knicken beziehungsweise Wegbiegen eines Anschlussteils - beispielsweise der Druckstange eines Bremskraftverstärkers - vermieden, dass sich das Pedal in Richtung Fahrzeuginnenraum bewegt, zum anderen wird durch Öffnen der Pedallagerstelle, hervorgerufen durch Deformation - beispielsweise Verbiegen - von Strukturteilen - beispielsweise Blechen - ein Eindringen des Pedals in den Fahrzeuginnenraum verhindert. Der zweite Ansatz wird hier weiterverfolgt.

Aus der Patentschrift DE 100 40 043 ist eine Sicherheitsvorrichtung bekannt, welche durch Öffnen der Pedallagerstelle ein Eindringen des Pedals in den Fußraum verhindert. Die Sicherheitsvorrichtung umfasst einen Lagerbock, in dem die um eine Achse schwenkbaren Pedale auf Bolzen, welche in den Aufnahmen des Lagerbocks festgelegt sind, gelagert sind. Dabei weist der Lagerbock zumindest einen aufweitbaren Abschnitt auf, sodass die bei einem Unfall von außen aufgebrachte Krafteinwirkung zu einer Deformation der vorderen Spritzwand führt und in Folge dessen den Lagerbock aufweitet oder spreizt. Die Aufweitung kann mittels eines keilförmigen Elements erfolgen, welches zwischen die Schenkel eines Lagerbocks getrieben wird. Die hierzu erforderliche kinetische Energie wird aus der Bewegung des sich bei einem Unfall relativ zueinander verformenden Kraftfahrzeugteile gewonnen. Damit erfolgt die Freigabe der die Fußpedale lagernden Bolzen, so dass die Pedale mit dem Bolzen aus ihrer Halterung gelöst werden und nicht in den Fußraum eindringen. Zusätzlich ist ein Pedalniederhalter vorhanden, der sicherstellt, dass die Pedale im Falle eines Crashs in Richtung Fahrzeugboden geführt werden.

Bei der bekannten Sicherheitsvorrichtung tritt der Nachteil auf, dass sich die oben aufgeführte Lösung in der Praxis aufgrund des hohen Montageaufwandes nicht bewährt hat. Hinzu kommt, dass zumindest die Verformungsbereiche aus metallischen Werkstoffen hergestellt werden müssen und dadurch ein relativ hohes Gewicht des Lagerteils hervorruft. Weiterhin wird zu Gewährleistung, dass die Pedale Richtung Kraftfahrzeugboden geführt werden, mindestens ein weiteres Bauteil benötigt, welches letztendlich zu höheren Kosten führt.

Es ist daher die Aufgabe der vorliegenden Erfindung, eine Vorrichtung zu schaffen, bei der zur Verbesserung der Sicherheit der Fahrzeuginsassen eine gerichtete Bewegung des Pedals aus dem Gefahrenbereich heraus in Richtung Fahrzeugfront zu realisieren ist sowie das Öffnen der Lagerstelle zuverlässig gewährleistet wird, wobei der Montageaufwand reduziert werden sollte.

Diese Aufgabe wird mit einer Sicherheitsvorrichtung gemäß Anspruch 1 gelöst. Vorteilhafte Weiterbildungen der Erfindung sind in den abhängigen Ansprüchen angegeben.

Die Erfindung schließt die technische Lehre ein, dass die Mittel zum Zerstören des Lagerbolzens und des gerichteten Führens als mindestens ein, über ein Stützteil abgestütztes Trennelement ausgeführt sind, welches zwischen Anschlussteil und Lagerteil angeordnet beziehungsweise geführt ist, um bei Eintritt des Sicherheitsfalls das Anschlussteil gerichtet aus dem Gefahrenbereich wegzuführen beziehungsweise den Lagerbolzen zu zerstören und damit die Lagerung zu lösen. Hierzu kann ein form- und/oder kraftschlüssiger Kontakt zwischen Trennelement und Anschlussteil hergestellt werden.

Diese Lösung bietet den Vorteil, dass sie durch eine einfache Bauweise und durch eine Führung zwischen Lagerteil und Anschlussteil sehr wenig Bauraum beansprucht und sich das Trennteil aufgrund der kompakten Bauweise leicht montieren lässt. Durch die Öffnung des Lagerteils mittels Zerstörung des Bolzens anstatt durch Aufbiegen des Gehäuses lässt sich zudem Gewicht einsparen, dadurch, dass das Gehäuse keine metallischen Elemente benötigt. Durch ein integriertes formschlüssiges Element, welches die gerichtete Wegfuhr des Anschlussteils gewährleistet, entfällt ein entsprechendes Bauteil, welches separat diese Aufgabe übernimmt.

Ein weiterer Vorteil der Lösung ist, dass das Stützteil ein Fahrzeugquerträger ist, welcher sich infolge eines Unfalls nur gering oder gar nicht von seiner Ausgangslage weg bewegt, da so eine sicherer Auslösung der Sicherheitsvorrichtung gewährleistet ist.

Eine besonders vorteilhafte Lösung sieht vor, dass das Trennelement ein Trennkeil ist, wobei der Kraftschluss zwischen Trennelement und Lagerbolzen zum Zerstören des Lagerbolzens über mindestens eine Wirkfläche realisiert werden kann, deren Kontur dem Wirkprinzip eines Keils mit einer gekrümmten Oberfläche beziehungsweise einer spitz zulaufenden Geometrie im Sinne einer geneigten Ebene entspricht. Hierdurch ist auf einfache Weise eine Krafterhöhung zum Zerstören des Lagerbolzens erzielbar.

Vorteilhafter Weise kann das Anschlussteil ein Pedalhebel eines Kraftfahrzeugs sein.

Weiterhin kann der Pedalhebel vorteilhaft ein Bremspedal oder ein Kupplungspedal sein.

Eine die Erfindung verbessernde Maßnahme sieht vor, dass das Lagerteil ein mindestens zwei Schenkel zur Führung des Trennelements aufweisender Kunststofflagerbock ist. Durch die zwei Schenkel ist eine bessere Führung des Trennelements gewährleistet. Dadurch dass das Lagerteil als Kunststofflagerbock ausgebildet ist, ist gewährleistet, dass das Lagerteil kostengünstig und aus einem Material mit geringem Eigengewicht gebildet werden kann.

Eine weitere die Erfindung verbessernde Maßnahme ist es, dass der Formschluss zwischen Trennelement und Lagerbolzen zum gerichteten Wegführen des Anschlussteils über eine Verzahnung realisiert wird. Auf diese Weise ist sichergestellt, dass kein separates Bauteil benötigt wird, um diese Bewegung des Anschlussteils umzusetzen. Darüber hinaus gewährleistet eine Verzahnung eine optimale Kraftübertragung.

Aus Sicherheitsgründen kann der Lagerbolzen als Sollbruchstellen ausgeformte Freistiche aufweisen. Somit ist die Sicherheitsfunktion zusätzlich gewährleistet.

Schließlich ist es vorteilhaft, dass nacheinander ein Formschluss und ein Kraftschluss den Kontakt zwischen Trennelement und Lagerbolzen herstellen, wobei bei einem Unfall zuerst das Trennelement den Lagerbolzen über eine formschlüssige Verzahnung das Anschlussteil in Richtung Fahrzeugboden führt bevor der Lagerbolzen kraftschlüssig über die Wirkflächen des Trennelements zerstört wird. Damit ist gewährleistet, dass bei Auslösen der Sicherheitsfunktion zuerst das hervorstehende Anschlussteil aus dem unmittelbarem Gefahrenbereich gerichtet weggeführt wird und danach erst die Lagerstelle geöffnet wird um somit die Verletzungsgefahr auf ein Minimum zu reduzieren. Weitere die Erfindung verbessernde Maßnahmen sind in den Unteransprüchen angegeben oder werden nachstehend gemeinsam mit der Beschreibung eines bevorzugten Ausführungsbeispiels der Erfindung anhand der Figuren näher dargestellt. Es zeigt:
- Fig. 1: eine perspektivische Darstellung einer kompletten Anschlussteil-Lagerung,

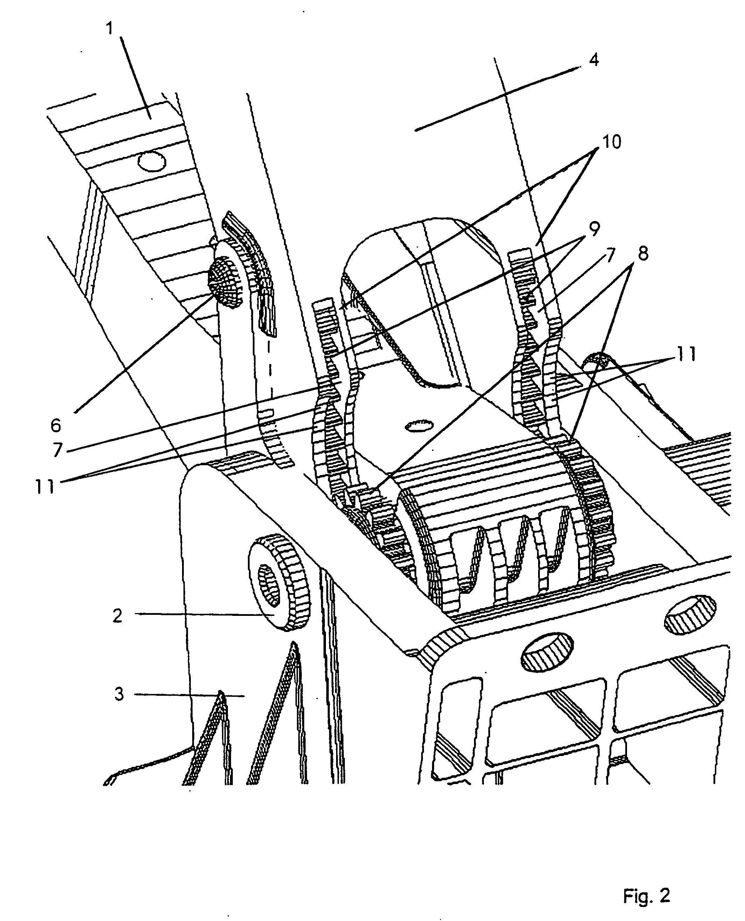

- Fig. 2: eine Detailansicht der Lagerung und
- Fig. 3: eine Schnittdarstellung der Lagerung.

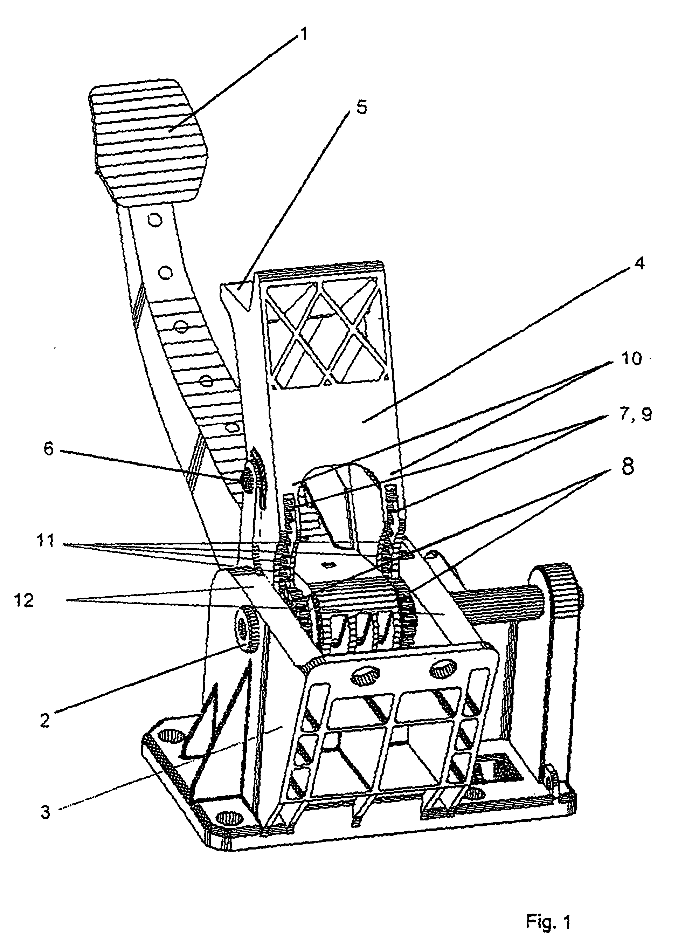

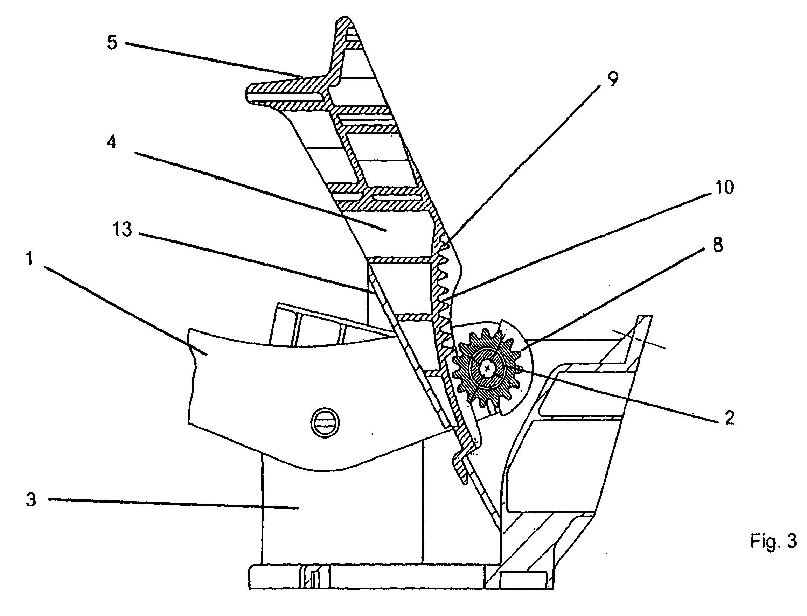

Die in Fig. 1 gezeigte Vorrichtung enthält zur Lagerung eines schwenkbar in einem Lagerteil 3 aufgenommen Anschlussteils 1 eines Kraftfahrzeuges einen Lagerbolzen 2. Das Anschlussteil 1 im Sinne der Ausführung ist ein Pedalhebel. Das Lagerteil 3, welches als Gehäuse ausgebildet sein kann, ist an der Stirnwand des Kraftfahrzeuges (nicht dargestellt) im Fußbereich des Kraftfahrzeuges befestigt. Ein Abschnitt eines Trennelements 4, welches in der Ausführungsform als Trennkeil ausgebildet ist, der sich über eine Stützfläche 5 gegen ein Kraftfahrzeugbauteil (nicht dargestellt) abstützt, ist zwischen einer Oberfläche 13 des als Gehäuse ausgeformten Lagerteils 3 und dem Lagerbolzen 2 aufgenommen. Das Kraftfahrzeugbauteil ist hier ein Querträger, der deshalb für die Anlage des Trennelements, genauer des Trennkeils 4 nützlich ist, weil er auch bei schweren Unfällen gar nicht oder zumeist nur geringförmig verformt wird, so dass eine sichere, nahezu unveränderliche Abstützung des Trennelements 4 möglich ist. Das Trennelement 4 ist mit dem Lagerteil 3 über ein Verbindungselement 6 verbunden, wobei das Verbindungselement 6 eine Arretierung des Trennelements 4 darstellt, die im Falle eines Unfalls durch die Relativbewegung zwischen Gehäuse 3 und Trennelement 4 abgelöst wird. Zudem weist das Trennelement 4 zwei Führungsspalte 7 auf, die die seitlichen Flächen einer Verzahnung 8 des Lagerbolzens 2 mit ihren Innenseiten seitlich berühren. Die Führungsspalte 7 sind so ausgebildet, dass sie über eine an dem Trennelement 4 vorhandene Verzahnung 9, die mit der Verzahnung 8 des Lagerbolzens 2 korrespondiert, herausragen und ohne dass die Verzahnungen 8, 9 des Lagerbolzens 2 und des Trennelements 4 im Eingriff sind, eine seitliche Führung bilden.
Das Trennelement 4, das infolge einer durch einen Unfall verursachten äußeren Krafteinwirkung durch eine Relativbewegung zwischen Trennelement 4 und Lagerbolzen 2 unter Aufbringung einer Scherkraft die Abscherung des Lagerbolzens 2 bewirkt, besteht aus einem Grundkörper, an dem zwei parallele Schenkel 10, welche mittig die vertiefte Verzahnung 9 und den Spalt 7 aufweisen, einteilig ausgebildet sind. Die Schenkel 10 weisen an der dem Lagerbolzen 2 zugewandten Seite jeweils Wirkflächen 11 auf, die vorliegend als je eine bogenförmige Kontur gestaltet wurden. Die parallele Anordnung der Schenkel 10 bewirkt bei Einwirkung einer äußeren Kraft, dass die Scherkräfte gleichmäßig an zwei beziehungsweise vier unterschiedlichen Bereichen des Lagerbolzens 2 aufgebracht werden, so dass der Lagerbolzen 2 sicher und zuverlässig durchtrennbar ist. Der gezeigte Lagerbolzen 2 durchsetzt zwei zueinander beabstandete Wangen 12 des Lagerteils 3. Das Anschlussteil 1 ist etwa mittig zwischen den Wangen 12 auf dem Lagerbolzen 2 angeordnet, sodass beiderseits des Anschlussteils 1 ein Abstand zwischen dem Anschlussteil 1 und der jeweiligen Wange 12 vorhanden ist. In diesem Abstand befinden sich mittig auf jeder Seite die Verzahnung 8 auf dem Lagerbolzen 2. Diese Abstände bilden Anlagebereiche für die Wirkflächen 11 des Trennelements 4 an dem Lagerbolzen 2. Die Abstände sollten nicht wesentlich größer sein, als die Breite der Schenkel 10 abzüglich der Verzahnungsbreite der Verzahnung 10. Auf der den Wirkflächen 11 des Trennelements 4 gegenüberliegenden Seite liegt das Trennelement 4 an einer als Widerlager ausgebildeten Gehäuseoberfläche 13 an. Aus der Schnittdarstellung in Fig. 3 ist ersichtlich, dass das Widerlager und die zugeordnete Oberfläche des Trennelements 4 ebene Oberflächen sind, die eine Gleitbewegung der Bauteile erlauben.

Der Lagerbolzen 2 weist mindestens zwei Sollbruchstellen auf, die als Freistiche ausgeführt sein können. Auf dem Lagerbolzen 2 sind mindestens zwei Verzahnungen 8 angebracht. Bei einem Crash wird die translatorische Bewegung des Trennelements 4 über die Verzahnung 9 des Trennelements 4 an die Verzahnung 8 des Lagerbolzens 2 übertragen und die Translation in eine Rotation umgeformt und somit eine gerichtete Drehbewegung des Anschlussteils 1 in Richtung Fahrzeugboden erzielt.

### Bezugszeichenliste

- **1**: Anschlussteil
- **2**: Lagerbolzen
- **3**: Lagerteil
- **4**: Trennelement
- **5**: Stützfläche
- **6**: Verbindungselement
- **7**: Führungsspalt
- **8**: Verzahnung (des Lagerelements)
- **9**: Verzahnung (des Trennkeils)
- **10**: Schenkel (des Trennkeils)
- **11**: Wirkfläche (des Trennkeils)
- **12**: Wange (des Gehäuses)
- **13**: Gehäuseoberfläche, Widerlager

## Patentansprüche

1. Sicherheitsvorrichtung zum Öffnen einer Lagerung, insbesondere einer Pedalbolzenlagerung eines Kraftfahrzeuges, mit mindestens einem ersten Lagerteil (3), welches mindestens eine Durchgangsbohrung für eine Bolzenverbindung zu mindestens einem Anschlussteil (1) aufweist, sowie mindestens einem Lagerbolzen (2), welcher sich koaxial durch die Durchgangsbohrung erstreckt, um das Lagerteil (3) und das Anschlussteil (1) miteinander zu verbinden, wobei zur Realisierung einer Sicherheitsfunktion Mittel, die bei einem Unfall das Anschlussteil (1) gerichtet aus dem Gefahrenbereich in Richtung Fahrzeugfront bewegen und ferner Mittel zum Zerstören des Lagerbolzens (2), zum öffnen der Lagerung und zum Ablösen des Anschlussteiles (1) vorhanden sind,
**dadurch gekennzeichnet, dass**
die Mittel zum gerichteten Wegführen des Anschlussteils (1) gleichsam die Mittel zum Zerstören des Lagerbolzens (2) sind und aus mindestens einem, über ein Stützteil abgestützten Trennelement (4) bestehen, welches zwischen Anschlussteil (1) und Lagerteil (3) aufgenommen beziehungsweise geführt ist, um bei Eintritt des Sicherheitsfalls den Lagerbolzen (2) zu zerstören und so die Lagerung zu lösen.

2. Sicherheitsvorrichtung nach Anspruch 1, **dadurch gekennzeichnet,**
**dass** das Stützteil an einem Fahrzeugquerträger abstützber ist, welcher sich infolge eines Unfalls nur gering oder gar nicht von seiner Ausgangslage weg bewegt.

3. Sicherheitsvorrichtung nach Anspruch 1, **dadurch gekennzeichnet,**
**dass** der Kraftschluss zwischen Trennelement (4) und Lagerbolzen (2) zum Zerstören des Lagerbolzens (2) über mindestens eine Wirkfläche realisiert wird, deren Kontur dem Wirkprinzip einer schiefen Ebene entspricht und dass das Trennelement (4) ein Trennkeil ist.

4. Sicherheitsvorrichtung nach Anspruch 1, **dadurch gekennzeichnet,**
**dass** das Anschlussteil (1) ein Pedalhebel eines Kraftfahrzeuges ist.

5. Sicherheitsvorrichtung nach Anspruch 4, **dadurch gekennzeichnet,**
**dass** der Pedalhebel (1) ein Bremspedal oder ein Kupplungspedal ist.

6. Sicherheitsvorrichtung nach Anspruch 1, **dadurch gekennzeichnet,**
**dass** das Lagerteil (3) ein mindestens zwei Schenkel (10) zur Führung des Trennelements (4) aufweisender Kunststofflagerbock ist.

7. Sicherheitsvorrichtung nach Anspruch 1, **dadurch gekennzeichnet,**
**dass** der Formschluss zwischen Trennelement (4) und Lagerbolzen (2) zum gerichteten Wegführen des Anschlussteils (1) über eine Verzahnung (8, 9) realisiert wird.

8. Sicherheitsvorrichtung nach Anspruch 1, **dadurch gekennzeichnet,**
**dass** der Lagerbolzen (2) als Sollbruchstellen ausgeformte Freistiche aufweist.

9. Sicherheitsvorrichtung nach Anspruch 1, **dadurch gekennzeichnet,**
**dass** nacheinander ein Formschluss und ein Kraftschluss den Kontakt zwischen Trennelement (4) und Lagerbolzen (2) herstellen, wobei bei einem Unfall zuerst das Trennelement (4) den Lagerbolzen (2) über eine formschlüssige Verzahnung (8, 9) das Anschlussteil (1) in Richtung Fahrzeugboden führt bevor der Lagerbolzen (2) über die Wirkflächen (11) des Trennelements (4) zerstört wird.

## Claims

1. Safety apparatus for opening a bearing arrangement, in particular a pedal bolt bearing arrangement of a motor vehicle, comprising at least one first bearing part (3), which has at least one through-bore for a bolt connection to at least one interface part (1), as well as at least one bearing bolt (2), which extends coaxially through the through-bore in order to connect the bearing part (3) and the interface part (1) to one another, wherein for realizing a safety function there are provided means, which in the event of an accident move the interface part (1) in an oriented manner out of the danger area and in the direction of the front of the vehicle, as well as means of destroying the bearing bolt (2), of opening the bearing arrangement and of detaching the interface part (1),
**characterized in that**
the means of guiding the interface part (1) away in an oriented manner are, as it were, the means of destroying the bearing bolt (2) and comprise at least one separating element (4), which is supported via a supporting part and which is accommodated and/or guided between interface part (1) and bearing part (3) in order, at the onset of a safety situation, to destroy the bearing bolt (2) and hence detach the bearing arrangement.

2. Safety apparatus according to claim 1, **characterized in that** the supporting part is supportable against a vehicle cross-member, which in the event of an accident moves away from its initial position only slightly or not at all.

3. Safety apparatus according to claim 1, **characterized in that** the friction locking between separating element (4) and bearing bolt (2) for destroying the bearing bolt (2) is realized by means of at least one working face, the contour of which corresponds to the working principle of an inclined plane, and that the separating element (4) is a separating wedge.

4. Safety apparatus according to claim 1, **characterized in that** the interface part (1) is a pedal lever of a motor vehicle.

5. Safety apparatus according to claim 4, **characterized in that** the pedal lever (1) is a brake pedal or a clutch pedal.

6. Safety apparatus according to claim 1, **characterized in that** the bearing part (3) is a plastic bearing bracket, which comprises two limbs (10) for guiding the separating element (4).

7. Safety apparatus according to claim 1, **characterized in that** the positive locking between separating element (4) and bearing bolt (2) for guiding the interface part (1) away in an oriented manner is realized by means of a tooth system (8, 9).

8. Safety apparatus according to claim 1, **characterized in that** the bearing bolt (2) has undercuts formed as predetermined breaking points.

9. Safety apparatus according to claim 1, **characterized in that** a positive locking and a frictional locking successively establish the contact between separating element (4) and bearing bolt (2), wherein in the event of an accident first the separating element (4) guides the bearing bolt (2) via a positive tooth system (8, 9) the interface part (1) in the direction of the vehicle floor before the bearing bolt (2) is destroyed by means of the working faces (11) of the separating element (4).

## Revendications

1. Dispositif de sécurité pour l'ouverture d'un palier, notamment d'un palier d'axe de pédales d'un véhicule automobile, comportant au moins une première partie de palier (3), qui comporte au moins un perçage traversant pour une liaison de l'axe à au moins une partie de raccordement (1), ainsi qu'au moins un tourillon (2), qui s'étend coaxialement à travers le perçage traversant de manière à relier entre eux la partie de palier (3) et la partie de raccordement (1), dans lequel pour réaliser une fonction de sécurité il est prévu des moyens qui, lors d'un accident, sortent d'une manière dirigée la partie de raccordement (1) hors de la zone de danger en direction de l'avant du véhicule, et en outre des moyens pour détruire le tourillon (2) pour l'ouverture du palier et le détachement de la partie de raccordement (1),
**caractérisé en ce que**
les moyens d'écartement dirigé de la partie de raccordement (1) constituent aussi les moyens de destruction du tourillon (2) et sont constitués par au moins un élément de séparation (4), qui prend appui au moyen d'une partie d'appui et qui est logée et guidée entre la partie de raccordement (1) et la partie de palier (3), de manière à détruire le tourillon (2) et libérer ainsi le palier, lors de l'apparition d'un cas de sécurité.

2. Dispositif de sécurité selon la revendication 1, **caractérisé en ce que** l'élément d'appui peut prendre appui sur une traverse du véhicule, qui, sous l'effet d'un accident, s'écarte seulement faiblement ou ne s'écarte même pas de sa position de départ.

3. Dispositif de sécurité selon la revendication 1, **caractérisé en ce que** la liaison de force entre l'élément de séparation (4) et le tourillon (2) pour détruire le tourillon (2) est réalisée à l'aide d'au moins une surface active, dont le contour correspond au principe d'action d'un plan oblique, et que l'élément de séparation (4) est un coin de séparation.

4. Dispositif de sécurité selon la revendication 1, **caractérisé en ce que** la partie de raccordement (1) est un levier de pédale d'un véhicule automobile.

5. Dispositif de sécurité selon la revendication 4, **caractérisé en ce que** le levier de pédale (1) est une pédale de frein ou une pédale d'embrayage.

6. Dispositif de sécurité selon la revendication 1, **caractérisé en ce que** l'élément de palier (3) est un bloc de palier en matière plastique possédant au moins deux branches (10) pour le guidage de l'élément de séparation (4).

7. Dispositif de sécurité selon la revendication 1, **caractérisé en ce que** la liaison par formes complémentaires entre l'élément de séparation (4) et le tourillon (2) pour l'écartement dirigé de la partie de raccordement (1) est réalisé à l'aide d'une denture (8, 9).

8. Dispositif de sécurité selon la revendication 1, **caractérisé en ce que** le tourillon (2) possède des dégagements par rainure conformés en tant que zones de rupture de consigne.

9. Dispositif de sécurité selon la revendication 1, **caractérisé en ce qu'**une liaison par formes complémentaires et une liaison de force établissent successivement le contact entre l'élément de séparation (4) et le tourillon (2), et dans le cas d'un accident, tout d'abord l'élément de séparation (4) guidant le tourillon (2), au moyen d'une denture de liaison par formes complémentaires (8, 9), la partie de raccordement (1) en direction du plancher du véhicule avant que le tourillon (2) soit détruit au moyen des surfaces actives (11) de l'élément de séparation (2).
